# EUROPÄISCHE PATENTANMELDUNG

(11) **EP 1 072 836 A1**
(43) Veröffentlichungstag der Anmeldung: **31.01.2001**
(21) Anmeldenummer: 00115623.1
(22) Anmeldetag: 20.07.2000
(51) Int. Cl.: F16L 25/08

(54) **Fitting für die Verbindung druckbeaufschlagter Rohrleitungen, und Rohrverbindung mit Fitting**

(30) Priorität: 28.07.1999 DE 29913174 U
(71) Anmelder: TOTAL WALTHER GmbH, Feuerschutz und Sicherheit, 51069 Köln (DE)
(72) Erfinder: Kluge, Volker, 51061 Köln (DE); Stürtzer, Karl-Heinz, 51427 Berg.-Gladbach (DE); Melchior, Wolfgang, 51067 Köln (DE); Brill, Manfred, 51469 Berg.-Gladbach (DE)
(74) Vertreter: Selting, Günther, Dipl.-Ing.

(57) **Zusammenfassung**

Ein Fitting aus Temperguß in T- oder Bogenform für druckbeaufschlagte Rohrverbindungen zeichnet sich dadurch aus, dass die Schenkel (2,3,4) des Fittings (1) glatte Innenbohrungen (6,7,8) mit Anschlägen (19,11) und Innen-Ringnuten (12,13,14) aufweisen und jeder Schenkel (2-4) mit mindestens einer radialen Gewindebohrung (16,17,18) versehen ist. Dadurch wird das Anbringen des Fittings an Rohrleitungen vereinfacht und die Arbeits- und Montagezeiten auf der Baustelle werden verkürzt.

## Beschreibung

Die Neuerung betrifft ein Fitting aus Temperguß in T- oder Bogenform für druckbeaufschlagte Rohrverbindungen.

Die bekannten Fittings sind nach DIN 2950 normgerecht aus Temperguß hergestellt. Dabei sind die Schenkel der Fittings mit Innen- oder Außengewinde versehen. Für das Verbinden der Fittings mit den Enden einer Rohrleitung müssen die Rohrenden entweder werksseitig oder bauseitig mit Gewinde versehen werden, damit die Rohrenden mit den Fittings verschraubt werden können. Diese Maßnahmen sind sehr arbeitsaufwendig. Vor dem Zusammenbau von Fitting und Rohrende muß das Gewinde an den Rohrenden präpariert werden, d.h. es muß Dichtungshanf und Dichtungsmasse auf das Gewinde aufgetragen werden. Anschließend hieran wird der Fitting auf das Rohrende aufgeschraubt, sowie Hanfreste und Reste der Dichtungsmasse entfernt.

Der Neuerung liegt die Aufgabe zugrunde, die bei den bekannten Fittings bedingten arbeitsaufwendigen Schritte zu vermeiden und somit das Anbringen von Fittings an Rohrleitungen zu vereinfachen und dabei gleichzeitig die Arbeits- und Montagezeiten auf der Baustelle zu verkürzen.

Diese Aufgabe wird dadurch gelöst, daß die Schenkel des Fittings glatte Innenbohrungen mit Anschlägen und Innen-ringnuten aufweisen, und jeder Schenkel mit mindestens einer radialen Gewindebohrung versehen ist.

Ein derartiger Fitting ist für gewindelose, unter hohem Innendruck stehende, Rohr-Steckverbindungen geeignet.

Eine besonders vorteilhafte gewindelose Rohrverbindung mit einem neuerungsgemäßen Fitting wird darin gesehen, daß in die Ringnuten jeweils ein elastischer Dichtungsring eingelegt ist, wobei die Enden der Rohrleitungen durch die Dichtungsringe bis zu den Anschlägen geschoben und mittels gegen die Rohrenden drückenden Sicherungsschrauben in den radialen Gewindebohrungen gegen ein Abgleiten von den Rohrleitungen gesichert sind.

Ohne Bearbeitung der Außenwand der Enden der Rohrleitungen ist eine dichte Steck-Verbindung von Fitting und Rohr sichergestellt. Die Sicherungsschrauben gewährleisten einen sicheren Halt der Rohre und verhindern ein Auseinanderziehen der Verbindung.

Aufgrund der bei Dichtigkeitstests erzielten Ergebnisse kann die neuerungsgemäße gewindelose Fitting-Rohr-Verbindung in die komplette Groß-Feuerlösch-Anlagentechnik eingesetzt werden. Zu diesem Zweck wird eine Rohrverbindung nach den Ansprüchen 2-6 für den Einbau in die Sprinklerleitung einer Feuerlöschanlage vorgeschlagen, wobei einer der Schenkel des Fittings zum direkten Aufschrauben eines Sprinklers mit einem Innengewinde versehen ist.

Ein Ausführungsbeispiel der Neuerung ist in den Zeichnungen dargestellt und wird nachfolgend näher beschrieben. Es zeigen:

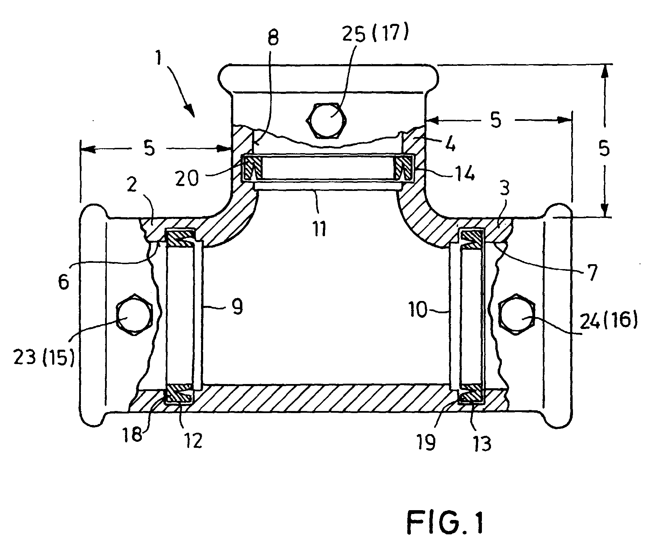

- Fig. 1: das Schnittbild eines T-förmigen Fittings,
- Fig. 2: das Schnittbild eines T-förmigen Fittings für eine Sprinklerrohrleitung,
- Fig. 3: einen Schnitt gemäß Linie III-III in Fig. 2, und
- Fig. 4: eine Sicherungsschraube mit einer Ringschneide.

Ein T-förmiger Fitting 1 weist Schenkel 2, 3 und 4 auf, deren Längen 5 gegenüber den genormten DIN-Ausführungen vergrößert sind. Jeder der Schenkel 2-4 ist mit einer Innenbohrung 6, 7 und 8 versehen, die Anschläge 9, 10 und 11 bilden. Außerdem weisen die Schenkel 2-4 innere Ringnuten 12, 13 und 14, sowie radiale Gewindebohrungen 15, 16 und 17 auf. In die Ringnuten 12-14 sind Dichtungsringe 18, 19 und 20 eingelegt.

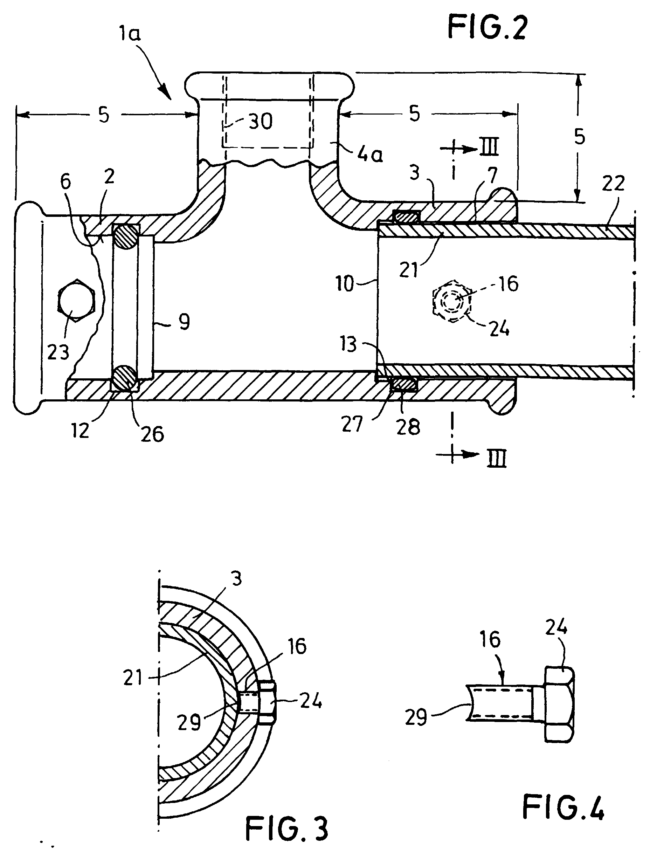

Zur Bildung einer Rohrverbindung wird das Ende 21 einer Rohrleitung 22 in eine der Innenbohrungen 6-8 eingeführt und durch die Dichtungsringe 18-20 hindurch bis zu den Anschlägen 9-11 geschoben. Damit die Rohrleitungen 22 nicht aus dem Fitting 1 gezogen und damit die Rohrverbindung aufgehoben wird, sind in die radialen Gewindebohrungen 15-17 Sicherungsschrauben 23, 24 und 25 eingeschraubt, die mit Ringschneiden 29 gegen die Rohrleitung 22 drücken und damit einen sicheren Halt gewährleisten. Die Dichtungsringe 18-20 können als O-Ringe 26 oder als Vierkantringe 27 mit komischen Ringschlitzen 28 ausgebildet sein. Auch jede andere Ringform kann eingesetzt werden. Fig. 2 zeigt einerseits die Anwendung eines O-Ringes 26 und andererseits eines Vierkantringes 27 mit Ringschlitz 28. Außerdem zeigt Fig. 2 die Ausbildung eines Fittings 1a für den Einbau in eine Sprinklerrohrleitung. In diesem Falle gehört das Rohr 22 zu einer Sprinklerleitung. Der Schenkel 4a des Fittings 1a weist keine gesonderte Innenbohrung auf. In das gegossene Teilstück ist eine Gewindebohrung 30 eingebracht, in die der nicht dargestellte Sprinkler eingeschraubt wird.

Im Ausführungsbeispiel ist ein T-förmiger Fitting dargestellt und beschrieben. Die Neuerung ist nicht an diese Ausführungsform gebunden. Die Neuerung ist anwendbar auch bei Bogenstücken mit unterschiedlichen Winkeln, als auch bei T-Stücken mit einem oder zwei gebogenen Abgängen.

Dichtigkeitstests ergaben folgende Ergebnisse:

### 1. Dichtigkeitstest mit Wasser

Die Verbindung Fitting - Rohr wurde mit 250 bar Wasserdruck beaufschlagt.
- Ergebnis:: Es wurden weder ein Herausgleiten des Rohres aus dem Fitting noch auftretende Undichtigkeiten festgestellt.
- Standzeit:: 15 Minuten

### 2. Dichtigkeitstest mit Luft

Die Verbindung Fitting - Rohr wurde mit 10 bar Luftdruck beaufschlagt.
- Ergebnis:: Es wurden weder ein Herausgleiten des Rohres aus dem Fitting noch auftretende Undichtigkeiten festgestellt.
- Standzeit:: 8 Stunden

### 3. Dichtigkeitstest mit CO₂-Gas

Die Verbindung Fitting - Rohr wurde mit 55 bar CO₂-Gasdruck beaufschlagt.
- Ergebnis:: Es wurden weder ein Herausgleiten des Rohres aus dem Fitting noch auftretende Undichtigkeiten festgestellt.
- Standzeit:: 272 Stunden

## Patentansprüche

1. Fitting aus Temperguß in T- oder Bogenform für druckbeaufschlagte Rohrverbindungen,
**dadurch gekennzeichnet, daß** die Schenkel (2,3,4) des Fittings (1) glatte Innenbohrungen (6,7,8) mit Anschlägen (9,10,11) und Innen-Ringnuten (12,13,14) aufweisen, und jeder Schenkel (2-4) mit einer oder mehreren radialen Gewindebohrungen (16,17,18) versehen ist.

2. Rohrverbindung mit einem Fitting nach Anspruch 1, dadurch gekennzeichnet, daß in die Ringnuten (12-14) jeweils ein elastischer Dichtungsring (18,19,20) eingelegt ist, wobei die Enden (21) der Rohrleitungen (22) durch die Dichtungsringe (18-20) bis zu den Anschlägen (9-11) geschoben und mittels gegen die Enden (21) drückenden Sicherungsschrauben (23,24,25) in den radialen Gewindebohrungen (16-18) gegen ein Abgleiten von den Rohrleitungen (22) gesichert sind.

3. Rohrverbindung nach Anspruch 2, dadurch gekennzeichnet, daß die Enden (21) der Rohrleitungen (22) mit einem Gleitmittel vorpräpariert sind.

4. Rohrverbindung nach Anspruch 2, dadurch gekennzeichnet, daß die Dichtungsringe (18-20) als O-Ringe (26) ausgebildet sind.

5. Rohrverbindung nach Anspruch 2, dadurch gekennzeichnet, daß die Dichtungsringe (18-20) aus einem Vierkantring (27) bestehen, der mit einem konischen Ringschlitz (28) versehen ist.

6. Rohrverbindung nach Anspruch 2, dadurch gekennzeichnet, daß die Enden der Sicherungsschrauben (23-25) mit Ringschneiden (29) versehen sind.

7. Rohrverbindung nach einem der Ansprüche 2-6, für den Einbau in die Sprinkler-Rohrleitung einer Feuerlöschanlage, dadurch gekennzeichnet, daß einer der Schenkel (4a) des Fittings (1a) zum direkten Aufschrauben eines Sprinklers mit einem Innengewinde (30) versehen ist.
